# EUROPÄISCHE PATENTSCHRIFT

(11) **EP 4 076 855 B1**
(45) Veröffentlichungstag und Bekanntmachung des Hinweises auf die Patenterteilung: **21.02.2024**
(21) Anmeldenummer: 20820954.4
(22) Anmeldetag: 11.12.2020
(51) Int. Cl.: B25C 1/06, H02K 11/00, H02K 33/00

(54) **ARBEITSGERÄT**
WORKING IMPLEMENT
APPAREIL DE TRAVAIL

(30) Priorität: 20.12.2019 EP 19218916
(43) Veröffentlichungstag der Anmeldung: 26.10.2022
(73) Patentinhaber: Hilti Aktiengesellschaft, 9494 Schaan (LI)
(72) Erfinder: ABU ANTOUN, Chafic, 9470 Buchs (CH); DITTRICH, Tilo, 6800 Feldkirch (AT); BINDER, Albert, 9470 Buchs (CH); GUT, Manuel, 6811 Göfis (AT); SCHMID, Florian, 9470 Buchs SG (CH); SMAJIC, Jasmin, 8165 Schöfflisdorf (CH)
(74) Vertreter: Hilti Aktiengesellschaft Corporate Intellectual Property
(86) Internationale Anmeldenummer: PCT/EP2020/085685
(87) Internationale Veröffentlichungsnummer: WO 2021/122351

(56) Entgegenhaltungen:
- WO-A1-2019/211264
- WO-A1-2019/233845

## Beschreibung

Die vorliegende Erfindung betrifft ein Arbeitsgerät, wie beispielsweise ein Setzgerät zum Eintreiben von Befestigungselementen in einen Untergrund.

Derartige Arbeitsgeräte weisen oft einen Arbeitskolben auf, welcher dafür vorgesehen ist, sich entlang einer Arbeitsachse zu bewegen. Angetrieben wird der Arbeitskolben von einem Antrieb, welcher den Arbeitskolben beschleunigt. Die WO 2018/104406 A1 beschreibt einen Antrieb, welcher einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, um den Arbeitskolben zu beschleunigen.

Setzgeräte weisen üblicherweise eine Aufnahme für ein Befestigungselement auf, aus welcher heraus ein darin aufgenommenes Befestigungselement entlang einer Arbeitsachse in den Untergrund befördert wird. Das Arbeitselement wird hierfür von dem Antrieb entlang der Arbeitsachse auf das Befestigungselement zu angetrieben. Aus der US 6,830,173 B2 ist ein Setzgerät mit einem Antrieb bekannt, welcher einen elektrischen Kondensator und eine Spule aufweist.

WO2019/211264A1 offenbart den Oberbegriff des Anspruches 1.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem vorzugsweise handgeführten Arbeitsgerät zum Bearbeiten eines Untergrunds, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben von einer Startposition aus entlang der Arbeitsachse auf den Untergrund zu anzutreiben, wobei der Antrieb eine an dem Stator angeordnete Statorspule aufweist und dafür vorgesehen ist, die Statorspule mit elektrischem Strom einer ersten Stromstärke I₁ zu beaufschlagen, um ein Magnetfeld zu erzeugen, welches den Arbeitskolben relativ zu dem Stator beschleunigt, bevorzugt abstösst, wobei der Antrieb eine an dem Arbeitskolben angeordnete Kolbenspule aufweist und dafür vorgesehen ist, die Kolbenspule mit elektrischem Strom einer zweiten Stromstärke I₂ zu beaufschlagen, um ein Magnetfeld zu erzeugen, welches den Arbeitskolben relativ zu dem Stator beschleunigt, bevorzugt abstösst, wobei die zweite Stromstärke I₂ kleiner ist als die erste Stromstärke I₁.

Eine vorteilhafte Ausgestaltung ist dadurch gekennzeichnet, dass der Antrieb einen Kolbenspulenkondensator aufweist, wobei die Kolbenspule elektrisch mit dem Kolbenspulenkondensator verbindbar ist, um bei einer Schnellentladung des Kolbenspulenkondensators mit dem elektrischen Strom der ersten Stromstärke I₁ durchflossen zu werden. Eine weitere vorteilhafte Ausgestaltung ist dadurch gekennzeichnet, dass der Antrieb einen Statorspulenkondensator aufweist, wobei die Statorspule elektrisch mit dem Statorspulenkondensator verbindbar ist, um bei einer Schnellentladung des Statorspulenkondensators mit dem elektrischen Strom der zweiten Stromstärke I₂ durchflossen zu werden.

Eine vorteilhafte Ausgestaltung ist dadurch gekennzeichnet, dass die Kolbenspule eine Kolbenspulenachse aufweist und die Statorspule eine Statorspulenachse aufweist, welche parallel zur Kolbenspulenachse orientiert ist Bevorzugt fällt die Statorspulenachse mit der Kolbenspulenachse zusammen. Bevorzugt werden die Kolbenspule und die Statorspule bei der Schnellentladung des Kolbenspulenkondensators und des Statorspulenkondensators gegensinnig mit Strom durchflossen, um einander entgegengesetzte Magnetfelder zu erzeugen. Ebenfalls bevorzugt sind der Kolbenspulenkondensator und der Statorspulenkondensator identisch. Besonders bevorzugt sind die Kolbenspule und die Statorspule elektrisch parallel zueinander verschaltet.

Eine vorteilhafte Ausgestaltung ist dadurch gekennzeichnet, dass die Statorspule eine erste Windungszahl N₁ aufweist und die Kolbenspule eine zweite Windungszahl N₂ aufweist, welche sich von der ersten Windungszahl N₁ unterscheidet. Bevorzugt ist N₂ > N₁. Ebenfalls bevorzugt ist im Wesentlichen N₁·I₁ = N₂·I₂.

Eine vorteilhafte Ausgestaltung ist dadurch gekennzeichnet, dass der Stator zwei elektrische Statorkontakte aufweist und der Arbeitskolben zwei jeweils an einem der elektrischen Statorkontakte gleitende elektrische Kolbenkontakte aufweist, um die Kolbenspule mit dem elektrischen Strom der zweiten Stromstärke I₂ zu beaufschlagen. Bevorzugt weisen die elektrischen Statorkontakte jeweils eine Kontaktschiene und die elektrischen Kolbenkontakte jeweils eine Kontaktbürste oder einen Schleifring auf oder umgekehrt.

Eine vorteilhafte Ausgestaltung ist dadurch gekennzeichnet, dass das Arbeitsgerät als Setzgerät zum Eintreiben von Befestigungselementen in einen Untergrund ausgebildet ist, aufweisend eine Aufnahme, welche dafür vorgesehen ist, ein Befestigungselement aufzunehmen, wobei der Arbeitskolben dafür vorgesehen ist, ein in der Aufnahme aufgenommenes Befestigungselement entlang der Arbeitsachse in den Untergrund zu befördern, und wobei der Antrieb dafür vorgesehen ist, den Arbeitskolben entlang der Arbeitsachse auf das Befestigungselement zu anzutreiben.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Unter einem weichmagnetischen Material im Sinne der Erfindung ist ein Material zu verstehen, welches eine hohe magnetische Sättigungsflussdichte und insbesondere eine kleine Koerzitivfeldstärke aufweist und somit ein das Material durchsetzendes Magnetfeld verstärkt. Insbesondere weist das weichmagnetische Material des Statorrahmens und/oder des Kolbenrahmens eine Sättigungsflussdichte von mindestens 1,0 T, bevorzugt mindestens 1,3 T, besonders bevorzugt mindestens 1,5 T, auf. Unter einem elektrisch leitenden Material im Sinne der Erfindung ist ein Material zu verstehen, welches eine hohe spezifische elektrische Leitfähigkeit aufweist, so dass ein das Material durchsetzendes Magnetfeld in dem Material Wirbelströme erzeugt. Ein weichmagnetisches und/oder elektrisch leitendes Material besteht bevorzugt aus einem ferromagnetischen Material, besonders bevorzugt aus einem ferromagnetischen Metall, beispielsweise Eisen, Kobalt, Nickel, oder einer Legierung mit einem oder mehreren ferromagnetischen Metallen als Hauptbestandteil.

In den Zeichnungen ist die Erfindung in mehreren Ausführungsbeispielen dargestellt.

Es zeigen:
- Fig. 1: ein Arbeitsgerät in einem Längsschnitt,
- Fig. 2: eine Antrieb-Arbeitskolben-Einheit eines Arbeitsgeräts,
- Fig. 3: einen Antrieb eines Arbeitsgeräts, und
- Fig. 4: einen Antrieb eines Arbeitskolbens.

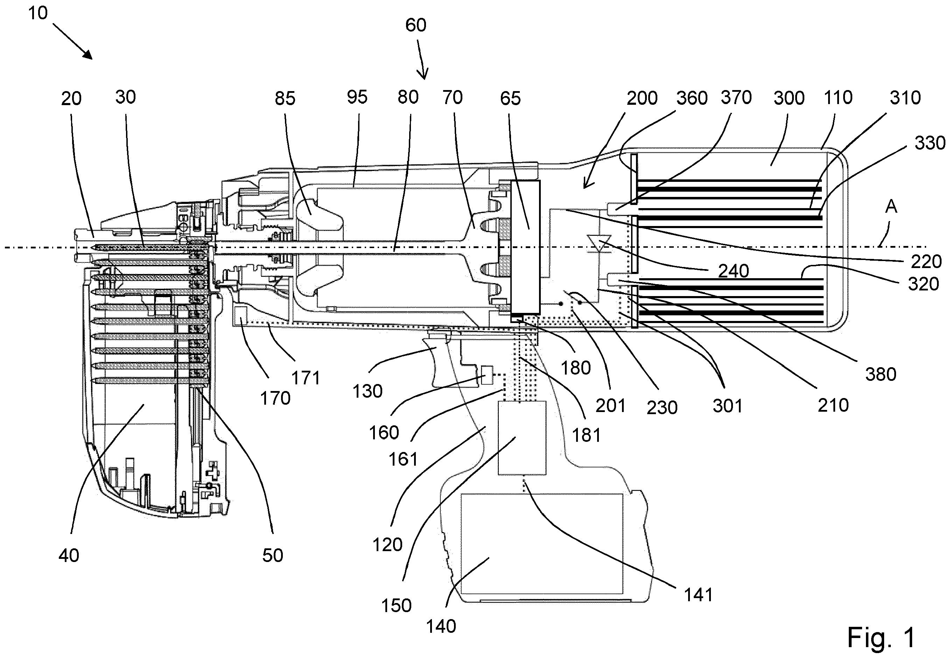

In Fig. 1 ist ein Arbeitsgerät 10 zum Bearbeiten eines nicht gezeigten Untergrunds in einem Längsschnitt dargestellt, welches als handgeführtes Setzgerät zum Eintreiben von Befestigungselementen in den Untergrund ausgebildet ist. Das Arbeitsgerät 10 weist eine als Bolzenführung ausgebildete Aufnahme 20 auf, in welcher ein als Nagel ausgebildetes Befestigungselement 30 aufgenommen ist, um entlang einer Arbeitsachse A in den Untergrund eingetrieben zu werden (in Fig. 1 nach links). Für eine Zuführung von Befestigungselementen zu der Aufnahme umfasst das Arbeitsgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf.

Das Arbeitsgerät 10 weist einen Arbeitskolben 60 auf, welcher einen Kolbenteller 70 und eine Kolbenstange 80 umfasst. Der Arbeitskolben 60 ist dafür vorgesehen, das Befestigungselement 30 aus der Aufnahme 20 heraus entlang der Arbeitsachse A in den Untergrund zu befördern. Hierbei ist der Arbeitskolben 60 mit seinem Kolbenteller 70 in einem Führungszylinder 95 entlang der Arbeitsachse A geführt. Bei nicht gezeigten Ausführungsbeispielen ist der Arbeitskolben von zwei, drei oder mehr Führungselementen, beispielsweise Führungsstangen entlang der Arbeitsachse geführt. Der Arbeitskolben 60 wird seinerseits von einem Antrieb 65 angetrieben, welcher einen Schaltkreislauf 200 und einen Kondensator 300 umfasst. Der Schaltkreislauf 200 ist dafür vorgesehen, eine elektrische Schnellentladung des zuvor aufgeladenen Kondensators 300 herbeizuführen und den dabei fliessenden Entladestrom dem Antrieb 65 zuzuführen.

Das Arbeitsgerät 10 umfasst weiterhin ein Gehäuse 110, in welchem der Antrieb 65 aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, einen an dem Antrieb 65 angeordneten Temperatursensor 180 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Arbeitsgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Arbeitsgerät 10 an einen nicht gezeigten Untergrund (in Fig. 1 nach links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 elektrisch aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und der Arbeitskolben 60 in seiner in Fig. 1 dargestellten setzbereiten Position ist, befindet sich das Arbeitsgerät 10 in einem setzbereiten Zustand. Dadurch, dass die Aufladung des Kondensators 300 erst durch das Anpressen des Arbeitsgeräts 10 an den Untergrund bewirkt wird, ist zur Erhöhung der Sicherheit von umstehenden Personen ein Setzvorgang nur dann ermöglicht, wenn das Arbeitsgerät 10 an den Untergrund angepresst ist. Bei nicht gezeigten Ausführungsbeispielen leitet die Steuereinheit den Kondensator-Aufladevorgang bereits bei einem Einschalten des Arbeitsgeräts oder bei einem Abheben des Arbeitsgeräts von dem Untergrund oder bei Beendigung eines vorausgegangenen Eintreibvorgangs ein.

Wenn bei setzbereitem Arbeitsgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu dem Antrieb 65 geleitet wird, indem der Kondensator 300 elektrisch entladen wird.

Der in Fig. 1 schematisch dargestellte Schaltkreislauf 200 umfasst hierzu zwei Entladeleitungen 210, 220, welche den Kondensator 300 mit dem Antrieb 65 verbinden und von denen zumindest eine Entladeleitung 210 von einem normalerweise geöffneten Entladeschalter 230 unterbrochen ist. Der Schaltkreislauf 200 bildet mit dem Antrieb 65 und dem Kondensator 300 unter Umständen einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs 65 aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer auf einer Trägerfolie 330 angeordneten Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch den Antrieb 65 fliesst, welcher den Arbeitskolben 60 auf die Aufnahme 20 sowie das darin aufgenommene Befestigungselement 30 zu antreibt. Sobald die Kolbenstange 80 des Arbeitskolbens 60 auf einen nicht näher bezeichneten Kopf des Befestigungselements 30 trifft, wird das Befestigungselement 30 von dem Arbeitskolben 60 in den Untergrund eingetrieben. Überschüssige Bewegungsenergie des Arbeitskolbens 60 wird von einem Bremselement 85 aus einem federelastischen und/oder dämpfenden Material, beispielsweise Gummi oder einem Elastomer, aufgenommen, indem sich der Arbeitskolben 60 mit seinem Kolbenteller 70 gegen das Bremselement 85 bewegt und von diesem bis zu einem Stillstand abgebremst wird. Danach wird der Arbeitskolben 60 von einer nicht näher bezeichneten Rückstellvorrichtung in die setzbereite Position zurückgestellt.

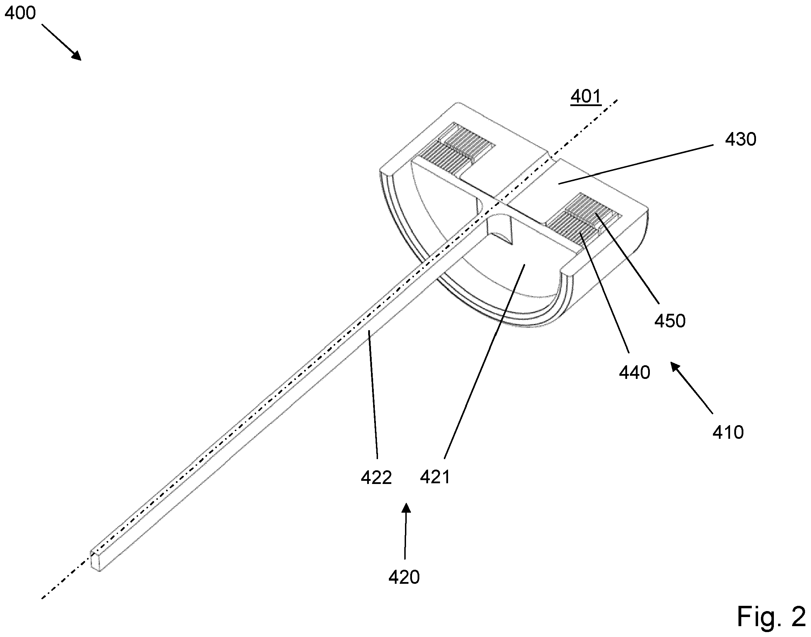

In Fig. 2 ist eine Antrieb-Arbeitskolben-Einheit 400 eines Arbeitsgeräts, beispielsweise des in Fig. 1 gezeigten Arbeitsgeräts 10 dargestellt. Die Antrieb-Arbeitskolben-Einheit 400 ist entlang einer Arbeitsachse 401 längs aufgeschnitten dargestellt und umfasst einen teilweise gezeigten Antrieb 410, einen Arbeitskolben 420 und einen Stator 430. Der Arbeitskolben 420 weist einen Kolbenteller 421 und eine Kolbenstange 422 auf und ist dafür vorgesehen, sich relativ zu dem Stator 430 entlang der Arbeitsachse 401 zu bewegen. Der Antrieb 410 ist dafür vorgesehen, den Arbeitskolben 420 entlang der Arbeitsachse 401 anzutreiben. Hierzu umfasst der Antrieb 410 einen nicht gezeigten Kolbenspulenkondensator und eine an dem Arbeitskolben 420 angeordnete Kolbenspule 440 auf. Die Kolbenspule 440 ist elektrisch mit dem Kolbenspulenkondensator verbindbar, um bei einer Schnellentladung des Kolbenspulenkondensators mit Strom durchflossen zu werden und ein Magnetfeld zu erzeugen, welches eine abstossende Kraft zwischen der Kolbenspule 440 und dem Stator 430 bewirkt und den Arbeitskolben 420 relativ zu dem Stator 430 beschleunigt. Die abstossende Kraft zwischen der Kolbenspule 440 und dem Stator 430 wird beispielsweise dadurch bewirkt, dass das von der Kolbenspule 440 erzeugte Magnetfeld den Stator 430 durchsetzt und in dem Stator 430 einen elektrischen Strom induziert, welcher seinerseits ein Magnetfeld erzeugt, welches dem von der Kolbenspule 440 erzeugten Magnetfeld entgegengesetzt ist. Der Stator 430 besteht dazu aus einem elektrisch leitenden Material, wie beispielsweise Kupfer, Eisen oder eine Legierung davon, welches die Arbeitsachse ringförmig umschliesst. Bei nicht gezeigten Ausführungsbeispielen weist der Stator einen Rahmen und einen an dem Rahmen angeordneten, bevorzugt an dem Rahmen befestigten Ringleiter mit hoher elektrischer Leitfähigkeit auf, welcher die Arbeitsachse ringförmig umschliesst.

Darüber hinaus umfasst der Antrieb 410 einen nicht gezeigten Statorspulenkondensator und eine an dem Arbeitskolben 420 angeordnete Statorspule 450. Die Statorspule 450 ist elektrisch mit dem Statorspulenkondensator verbindbar, um bei einer Schnellentladung des Statorspulenkondensators mit Strom durchflossen zu werden und ein Magnetfeld zu erzeugen, welches eine abstossende Kraft zwischen der Statorspule 450 und dem Arbeitskolben 420 bewirkt und den Arbeitskolben 420 von dem Stator 430 weg beschleunigt. Die abstossende Kraft zwischen der Statorspule 450 und dem Arbeitskolben wird beispielsweise dadurch bewirkt, dass das von der Statorspule 450 erzeugte Magnetfeld dem von der Kolbenspule 440 erzeugten Magnetfeld entgegengesetzt ist. Die Kolbenspule 440 und die Statorspule 450 werden hierzu bevorzugt gegensinnig und zeitlich überlappend, insbesondere gleichzeitig mit elektrischem Strom beaufschlagt, indem der Kolbenspulenkondensator und der Statorspulenkondensator entsprechend zeitlich aufeinander abgestimmt entladen werden, beispielsweise von einer nicht gezeigten Steuereinheit gesteuert. Die Kolbenspule 440 und die Statorspule 450 weisen jeweils eine Kolbenspulenachse beziehungsweise eine Statorspulenachse auf, welche mit der Arbeitsachse 401 zusammenfallen und somit parallel zueinander orientiert sind. Um den Arbeitskolben 420 in die in Fig. 2 gezeigte Ausgangsstellung zurückzubefördern, werden die Kolbenspule 440 und die Statorspule 450 bevorzugt gleichsinnig und zeitlich überlappend, insbesondere gleichzeitig mit elektrischem Strom beaufschlagt, so dass das von der Statorspule 450 erzeugte Magnetfeld und das von der Kolbenspule 440 erzeugte Magnetfeld gleichgerichtet sind. Dadurch wird eine anziehende Kraft zwischen der Statorspule 450 und dem Arbeitskolben 420 bewirkt und der Arbeitskolben 420 auf den Stator 430 zu beschleunigt.

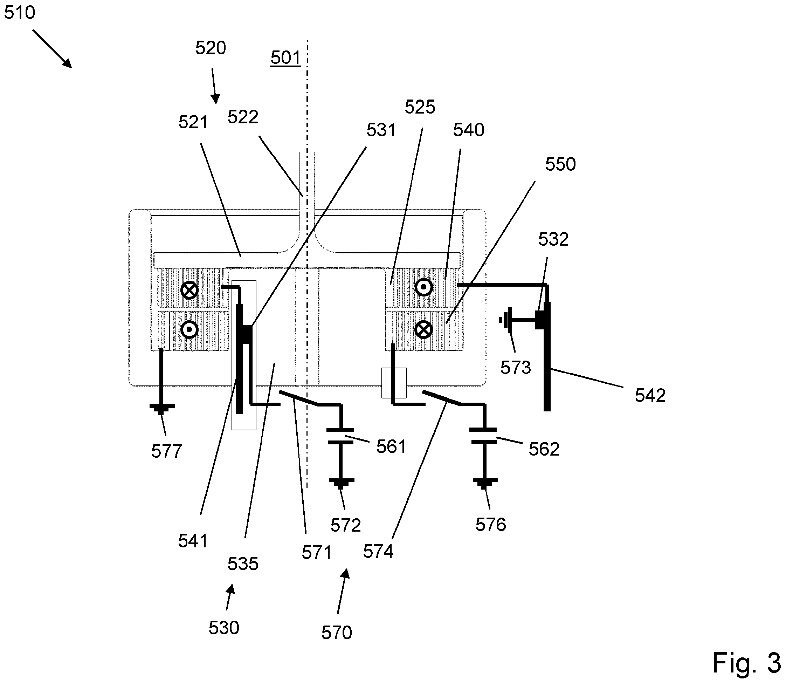

In Fig. 3 ist ein Antrieb 510 eines Arbeitsgeräts, beispielsweise des in Fig. 1 gezeigten Arbeitsgeräts 10 dargestellt. Der Antrieb 510 ist entlang einer Arbeitsachse 501 längs aufgeschnitten dargestellt und ist dafür vorgesehen, einen Arbeitskolben 520 mit einem Kolbenteller 521 und einer Kolbenstange 522 entlang der Arbeitsachse 501 anzutreiben und relativ zu einem Stator 530 zu bewegen. Der Antrieb 510 umfasst einen Kolbenspulenkondensator 561, einen Statorspulenkondensator 562, einen Schaltkreislauf 570 mit einem ersten Schalter 571 und einem zweiten Schalter 572, eine an dem Arbeitskolben 520 angeordnete Kolbenspule 540 und eine an dem Stator 530 angeordnete Statorspule 550. Die Kolbenspule 540 ist elektrisch mit dem Kolbenspulenkondensator 561 verbindbar, um bei einer Schnellentladung des Kolbenspulenkondensators 561 mit Strom durchflossen zu werden. Ein Stromfluss durch die Kolbenspule 540 erzeugt dabei ein erstes Magnetfeld. Die Statorspule 550 ist elektrisch mit dem Statorspulenkondensator 562 verbindbar, um bei einer Schnellentladung des Statorspulenkondensators 562 mit Strom durchflossen zu werden. Ein Stromfluss durch die Statorspule 550 erzeugt ein zweites Magnetfeld.

Eine Elektrode des Kolbenspulenkondensators 561 ist mit einem Eingang des ersten Schalters 571 elektrisch verbunden und gegenüber einer Gegenelektrode des Kolbenspulenkondensators 561 aufladbar, welche mit einem ersten Massepotential 572, beispielsweise dem Minuspol eines elektrischen Akkumulators oder einer Batterie, elektrisch verbunden ist. Ein Ausgang des ersten Schalters 571 ist mit einem als Kontaktbürste ausgebildeten ersten elektrischen Statorkontakt 531, welchen der Stator 530 aufweist, elektrisch verbunden, bevorzugt fest verdrahtet. Ein Eingang der Kolbenspule 540 auf einer Innenseite der Kolbenspule 540 ist mit einem als Kontaktschiene ausgebildeten ersten Kolbenkontakt 541, welchen der Arbeitskolben 520 aufweist, elektrisch verbunden, bevorzugt fest verdrahtet. Der erste Kolbenkontakt 541 gleitet elektrisch leitend an dem ersten Statorkontakt 531 entlang, wenn sich der Arbeitskolben 520 entlang der Arbeitsachse 501 bewegt. Eine nicht gezeigte erste Feder belastet den ersten Statorkontakt 531 auf den ersten Kolbenkontakt 541 zu. Bei nicht gezeigten Ausführungsbeispielen belastet eine Feder zusätzlich oder alternativ den ersten Kolbenkontakt auf den ersten Statorkontakt zu.

Ein Ausgang der Kolbenspule 540 auf einer Aussenseite der Kolbenspule 540 ist mit einem als Kontaktschiene ausgebildeten zweiten Kolbenkontakt 542, welchen der Arbeitskolben 520 aufweist, elektrisch verbunden, bevorzugt fest verdrahtet. Der zweite Kolbenkontakt 542 gleitet elektrisch leitend an einem zweiten Statorkontakt 532 entlang, wenn sich der Arbeitskolben 520 entlang der Arbeitsachse 501 bewegt. Der Stator 530 weist den zweiten Statorkontakt 532 auf, welcher als Kontaktbürste ausgebildet und mit einem zweiten Massepotential 573, das vorzugsweise identisch mit dem ersten Massepotential 572 ist, elektrisch verbunden ist. Eine nicht gezeigte zweite Feder belastet den zweiten Statorkontakt 532 auf den zweiten Kolbenkontakt 542 zu. Bei nicht gezeigten Ausführungsbeispielen belastet eine Feder zusätzlich oder alternativ den zweiten Kolbenkontakt auf den zweiten Statorkontakt zu. Die Kolbenkontakte 541, 542 kontaktieren die Statorkontakte 531, 532 nicht notwendigerweise während der gesamten Bewegung des Arbeitskolbens. Bei einigen Anwendungen ist eine Kontaktierung während der ersten 0,5 ms bis 1 ms, insbesondere während der ersten 0,6 ms ausreichend. Die Kolbenkontakte 541, 542 weisen eine Länge in Richtung der Arbeitsachse 501 auf, welche für einige Anwendungsgebiete etwa 10 mm bis 30 mm beträgt.

Eine Elektrode des Statorspulenkondensators 562 ist mit einem Eingang des zweiten Schalters 574 elektrisch verbunden und gegenüber einer Gegenelektrode des Statorspulenkondensators 562 aufladbar, welche mit einem dritten Massepotential 576, beispielsweise dem Minuspol eines elektrischen Akkumulators oder einer Batterie, elektrisch verbunden ist. Ein Ausgang des zweiten Schalters 574 ist mit einem Eingang der Statorspule 550 auf einer Innenseite der Statorspule 550 elektrisch verbunden, bevorzugt fest verdrahtet. Ein Ausgang der Statorspule 550 auf einer Aussenseite der Statorspule 550 ist mit einem vierten Massepotential 577, das vorzugsweise identisch mit dem dritten Massepotential 576 ist, elektrisch verbunden.

Die Kolbenkontakte 541, 542 sind starr mit dem übrigen Arbeitskolben 520 verbunden und bewegen sich mit dem übrigen Arbeitskolben 520 mit. Bei nicht gezeigten Ausführungsbeispielen ist der erste und/oder der zweite Statorkontakt als Schleifring ausgebildet. Bei weiteren nicht gezeigten Ausführungsbeispielen ist der erste und/oder der zweite Statorkontakt als Kontaktschiene und der erste beziehungsweise der zweite Kolbenkontakt als Kontaktbürste oder Schleifring ausgebildet. Der zweite Kolbenkontakt 542 und der zweite Statorkontakt 532 sind bezüglich der Arbeitsachse 501 radial ausserhalb der Statorspule 550 und der Kolbenspule 540 angeordnet. Bei nicht gezeigten Ausführungsbeispielen sind zusätzlich oder alternativ der erste Kolbenkontakt und der erste Statorkontakt radial ausserhalb der Statorspule und/oder der Kolbenspule angeordnet.

Die Schnellentladung der Kondensatoren 561, 562 über die Kolbenspule 540 und die Statorspule 550 ist mittels des Schaltkreislaufs 570 auslösbar, indem die Schalter 571, 574 bei jeweils elektrisch aufgeladenen Kondensatoren 561, 562 geschlossen und die Kolbenspule 540 und die Statorspule 550 elektrisch mit jeweils einem der Kondensatoren 561, 562 verbunden werden. Elektrischer Strom fliesst dann einerseits von dem Kolbenspulenkondensator 561 durch den ersten Schalter 571, durch den ersten Statorkontakt 531 und den ersten Kolbenkontakt 541, von innen nach aussen durch die Kolbenspule 540 und schliesslich durch den zweiten Kolbenkontakt 542 und den zweiten Statorkontakt 532 zum zweiten Massepotential 573. Andererseits fliesst elektrischer Strom von dem Statorspulenkondensator 562 durch den zweiten Schalter 574, von innen nach aussen durch die Statorspule 550 und schliesslich zum vierten Massepotential 577. Der erste Schalter 571 und der zweite Schalter 574 werden vorzugsweise gleichzeitig geschlossen.

Die Kolbenspule 540 und die Statorspule 550 weisen jeweils eine Kolbenspulenachse beziehungsweise eine Statorspulenachse auf, welche mit der Arbeitsachse 501 zusammenfallen und somit parallel zueinander orientiert sind. Die Kolbenspule 540 und die Statorspule 550 sind gleichsinnig gewickelt und werden gegensinnig von dem elektrischen Strom durchflossen, so dass das erste Magnetfeld und das zweite Magnetfeld zueinander entgegengesetzt sind. Bei nicht gezeigten Ausführungsbeispielen sind die Spulen gegensinnig gewickelt und werden gleichsinnig von dem elektrischen Strom durchflossen. Dadurch wird eine abstossende Kraft zwischen der Statorspule 550 und der Kolbenspule 540 und somit zwischen dem Stator 530 und dem Arbeitskolben 520 bewirkt, so dass der Arbeitskolben 520 relativ zu dem Stator 530 beschleunigt wird. Die Kolbenspule 540 und die Statorspule 550 werden gleichzeitig oder zeitlich überlappend von elektrischem Strom durchflossen, wobei erste Stromstärke I₁ des durch die Statorspule 550 fliessenden Stroms grösser ist als eine zweite Stromstärke I₂ des durch die Kolbenspule 540 fliessenden Stroms.

Die Statorspule 550 weist eine erste Windungszahl N₁ auf und die Kolbenspule 540 weist eine zweite Windungszahl N₂ auf, welche grösser ist als die erste Windungszahl N₁. Bevorzugt ist im Wesentlichen N₁·I₁ = N₂·I₂, so dass die von den Spulen 540, 550 erzeugten Magnetfelder im Wesentlichen gleich gross sind. Bei nicht gezeigten Ausführungsbeispielen weisen die Kolbenspule und die Statorspule gleich viele Spulenwindungen auf.

Der Arbeitskolben 520 weist einen Kolbenrahmen 525 auf, welcher vorzugsweise aus einem weichmagnetischen Material besteht, wie beispielsweise Eisen oder eine Legierung davon, beispielsweise Stahl. Der Kolbenrahmen 525 umgibt die Kolbenspule 540 und erstreckt sich bezüglich der Arbeitsachse 501 in einer umlaufenden Richtung. Dadurch wird das von der Kolbenspule 540 erzeugte zweite Magnetfeld im Bereich der Statorspule 550 verstärkt und die abstossende Kraft zwischen dem Stator 530 und dem Arbeitskolben 520 erhöht. Bevorzugt besteht der Kolbenteller 521 aus dem weichmagnetischen Material und bildet besonders bevorzugt den Kolbenrahmen. Ebenfalls bevorzugt besteht die Kolbenstange 522 aus dem weichmagnetischen Material und ist besonders bevorzugt einstückig mit dem Kolbenteller 521 verbunden, wodurch unter Umständen eine Steifigkeit und/oder mechanische Robustheit des Arbeitskolbens 520 erhöht ist. Der Stator 530 weist einen Statorrahmen 535 auf, welcher vorzugsweise aus einem weichmagnetischen Material besteht, wie beispielsweise Eisen oder eine Legierung davon, beispielsweise Stahl. Der Statorrahmen 535 umgibt die Statorspule 550 und erstreckt sich bezüglich der Arbeitsachse 501 in einer umlaufenden Richtung. Dadurch wird das von der Statorspule 550 erzeugte zweite Magnetfeld im Bereich der Kolbenspule 540 verstärkt und die abstossende Kraft zwischen dem Stator 530 und dem Arbeitskolben 520 erhöht.

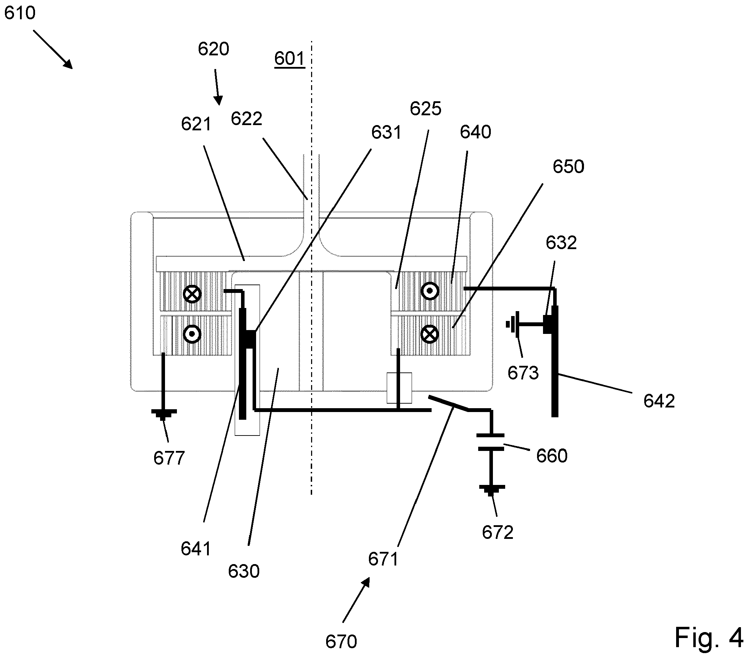

In Fig. 4 ist ein Antrieb 610 eines Arbeitsgeräts, beispielsweise des in Fig. 1 gezeigten Arbeitsgeräts 10 in einem Längsschnitt dargestellt. Der Antrieb 610 ist dafür vorgesehen, einen Arbeitskolben 620 mit einem Kolbenteller 621 und einer Kolbenstange 622 entlang der Arbeitsachse 601 anzutreiben und relativ zu einem Stator 630 zu bewegen. Der Antrieb 610 umfasst einen Kondensator 660, einen Schaltkreislauf 670 mit einem Schalter 671, eine an dem Arbeitskolben 620 angeordnete Kolbenspule 640 und eine an dem Stator 630 angeordnete Statorspule 650. Die Kolbenspule 640 ist elektrisch mit dem Kondensator 660 verbindbar, um bei einer Schnellentladung des Kondensators 660 mit Strom durchflossen zu werden, so dass der Kondensator 660 einen Kolbenspulenkondensator darstellt. Ein Stromfluss durch die Kolbenspule 640 erzeugt dabei ein erstes Magnetfeld. Die Statorspule 650 ist ebenfalls elektrisch mit dem Kondensator 660 verbindbar, um bei einer Schnellentladung des Kondensators 660 mit Strom durchflossen zu werden, so dass der Kondensator 660 auch einen Statorspulenkondensator darstellt. Ein Stromfluss durch die Statorspule 650 erzeugt ein zweites Magnetfeld.

Eine Elektrode des Kondensators 660 ist mit einem Eingang des Schalters 671 elektrisch verbunden und gegenüber einer Gegenelektrode des Kondensators 660 aufladbar, welche mit einem ersten Massepotential 672, beispielsweise dem Minuspol eines elektrischen Akkumulators oder einer Batterie, elektrisch verbunden ist. Ein Ausgang des Schalters 671 ist einerseits mit einem Eingang der Statorspule 650 auf einer Innenseite der Statorspule 650 und andererseits mit einem als Kontaktbürste ausgebildeten ersten elektrischen Statorkontakt 631, welchen der Stator 630 aufweist, elektrisch verbunden. Ein Eingang der Kolbenspule 640 auf einer Innenseite der Kolbenspule 640 ist mit einem als Kontaktschiene ausgebildeten ersten Kolbenkontakt 641, welchen der Arbeitskolben 620 aufweist, elektrisch verbunden. Der erste Kolbenkontakt 641 gleitet elektrisch leitend an dem ersten Statorkontakt 631 entlang, wenn sich der Arbeitskolben 620 entlang der Arbeitsachse 601 bewegt.

Ein Ausgang der Kolbenspule 640 auf einer Aussenseite der Kolbenspule 640 ist mit einem als Kontaktschiene ausgebildeten zweiten Kolbenkontakt 642, welchen der Arbeitskolben 620 aufweist, elektrisch verbunden. Der zweite Kolbenkontakt 642 gleitet elektrisch leitend an einem zweiten Statorkontakt 632 entlang, wenn sich der Arbeitskolben 620 entlang der Arbeitsachse 601 bewegt. Der Stator 630 weist den zweiten Statorkontakt 632 auf, welcher als Kontaktbürste ausgebildet und mit einem zweiten Massepotential 673, das vorzugsweise identisch mit dem ersten Massepotential 672 ist, elektrisch verbunden ist. Ein Ausgang der Statorspule 650 auf einer Aussenseite der Statorspule 650 ist mit einem dritten Massepotential 677, welches vorzugsweise identisch mit dem ersten Massepotential 672 und/oder dem zweiten Massepotential 673, elektrisch verbunden.

Die Schnellentladung des Kondensators 660 über die Kolbenspule 640 und die Statorspule 650 ist mittels des Schaltkreislaufs 670 auslösbar, indem der Schalter 671 bei elektrisch aufgeladenem Kondensator 660 geschlossen und die Kolbenspule 640 und die Statorspule 650 elektrisch mit dem Kondensator 660 verbunden werden. Der elektrische Strom fliesst dann von dem Kondensator 660 durch den Schalter 671, einerseits von innen nach aussen durch die Statorspule 650, andererseits durch den ersten Statorkontakt 631 und den ersten Kolbenkontakt 641, von innen nach aussen durch die Kolbenspule 640 und schliesslich durch den zweiten Kolbenkontakt 642 und den zweiten Statorkontakt 632 zum zweiten Massepotential 673. Die Kolbenspule 640 und die Statorspule 650 sind also elektrisch parallel zueinander verschaltet und werden gleichzeitig von elektrischem Strom durchflossen.

Die Kolbenspule 640 und die Statorspule 650 weisen jeweils eine Kolbenspulenachse beziehungsweise eine Statorspulenachse auf, welche mit der Arbeitsachse 601 zusammenfallen und somit parallel zueinander orientiert sind. Die Kolbenspule 640 und die Statorspule 650 sind gegensinnig gewickelt und werden gleichsinnig von dem elektrischen Strom durchflossen, so dass das erste Magnetfeld und das zweite Magnetfeld zueinander entgegengesetzt sind. Dadurch wird eine abstossende Kraft zwischen der Statorspule 650 und der Kolbenspule 640 und somit zwischen dem Stator 630 und dem Arbeitskolben 620 bewirkt, so dass der Arbeitskolben 620 relativ zu dem Stator 630 beschleunigt wird. Die Statorspule 650 weist eine erste Windungszahl N₁ auf und die Kolbenspule 640 weist eine zweite Windungszahl N₂ auf, welche grösser ist als die erste Windungszahl N₁. Bevorzugt ist im Wesentlichen N₁·I₁ = N₂·I₂, so dass die von den Spulen 640, 650 erzeugten Magnetfelder im Wesentlichen gleich gross sind.

Bei nicht gezeigten Ausführungsbeispielen weist der Arbeitskolben eine oder mehrere weitere Kolbenspulen und/oder der Stator eine oder mehrere weitere Statorspulen auf. Bei weiteren nicht gezeigten Ausführungsbeispielen taucht die Kolbenspule in die Statorspule ein und die zwischen den Spulen übertragenen Kräfte sind Abstossungs- und/oder Anziehungskräfte. Bei weiteren nicht gezeigten Ausführungsbeispielen sind die Spulenachsen der Kolbenspule und/oder der Statorspule gewinkelt, insbesondere rechtwinklig, zueinander oder zur Arbeitsachse orientiert.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Arbeitsgerät auch für andere Anwendungen einsetzbar ist, beispielsweise als Bohrhammer oder dergleichen.

## Patentansprüche

1. Arbeitsgerät zum Bearbeiten eines Untergrunds, aufweisend einen Stator (430) und einen Arbeitskolben (420), welcher dafür vorgesehen ist, sich relativ zu dem Stator (430) entlang einer Arbeitsachse zu bewegen, weiterhin aufweisend einen Antrieb (410), welcher dafür vorgesehen ist, den Arbeitskolben (420) entlang der Arbeitsachse von einer Startposition aus auf den Untergrund zu anzutreiben, wobei der Antrieb (410) eine an dem Stator (430) angeordnete Statorspule (450) aufweist und dafür vorgesehen ist, die Statorspule (450) mit elektrischem Strom einer ersten Stromstärke I₁ zu beaufschlagen, um ein Magnetfeld zu erzeugen, welches den Arbeitskolben (420) relativ zu dem Stator (430) beschleunigt und insbesondere den Arbeitskolben (420) abstösst, **dadurch gekennzeichnet, dass** der Antrieb (410) eine an dem Arbeitskolben (420) angeordnete Kolbenspule (440) aufweist und dafür vorgesehen ist, die Kolbenspule (440) mit elektrischem Strom einer zweiten Stromstärke I₂ zu beaufschlagen, um ein Magnetfeld zu erzeugen, welches den Arbeitskolben (420) relativ zu dem Stator (430) beschleunigt und insbesondere den Stator (430) abstösst, wobei die zweite Stromstärke I₂ kleiner ist als die erste Stromstärke I₁.

2. Arbeitsgerät nach Anspruch 1, wobei der Antrieb (410) einen Kolbenspulenkondensator (561) aufweist, wobei die Kolbenspule (440) elektrisch mit dem Kolbenspulenkondensator (561) verbindbar ist, um bei einer Schnellentladung des Kolbenspulenkondensators (561) mit dem elektrischen Strom der ersten Stromstärke I₁ durchflossen zu werden.

3. Arbeitsgerät nach einem der vorhergehenden Ansprüche, wobei der Antrieb (410) einen Statorspulenkondensator (562) aufweist, wobei die Statorspule (450) elektrisch mit dem Statorspulenkondensator (562) verbindbar ist, um bei einer Schnellentladung des Statorspulenkondensators (562) mit dem elektrischen Strom der zweiten Stromstärke I₂ durchflossen zu werden.

4. Arbeitsgerät nach einem der vorhergehenden Ansprüche, wobei die Kolbenspule (440) eine Kolbenspulenachse aufweist und die Statorspule (450) eine Statorspulenachse aufweist, welche parallel zur Kolbenspulenachse orientiert ist und insbesondere mit der Kolbenspulenachse zusammenfällt.

5. Arbeitsgerät nach den Ansprüchen 2 und 4, wobei die Kolbenspule (440) und die Statorspule (450) bei der Schnellentladung des Kolbenspulenkondensators (561) und des Statorspulenkondensators (562) gegensinnig mit Strom durchflossen werden, um einander entgegengesetzte Magnetfelder zu erzeugen.

6. Arbeitsgerät nach einem der Ansprüche 2 bis 5, wobei der Kolbenspulenkondensator (561) und der Statorspulenkondensator (562) identisch sind.

7. Arbeitsgerät nach Anspruch 6, wobei die Kolbenspule (440) und die Statorspule (450) elektrisch parallel zueinander verschaltet sind.

8. Arbeitsgerät nach einem der vorhergehenden Ansprüche, wobei die Statorspule (450) eine erste Windungszahl N₁ aufweist, und wobei die Kolbenspule (440) eine zweite Windungszahl N₂ aufweist, welche sich von der ersten Windungszahl N₁ unterscheidet.

9. Arbeitsgerät nach Anspruch 8, wobei N₂ > N₁.

10. Arbeitsgerät nach einem der Ansprüche 8 bis 9, wobei im Wesentlichen N₁·I₁ = N₂·I₂.

11. Arbeitsgerät nach einem der vorhergehenden Ansprüche, wobei der Stator (430) zwei elektrische Statorkontakte (531, 532) aufweist und der Arbeitskolben (420) zwei jeweils an einem der elektrischen Statorkontakte (531, 532) gleitende elektrische Kolbenkontakte (541, 542) aufweist, um die Kolbenspule (440) mit dem elektrischen Strom der zweiten Stromstärke I₂ zu beaufschlagen.

12. Arbeitsgerät nach Anspruch 11, wobei die elektrischen Statorkontakte (531, 532) jeweils eine Kontaktschiene aufweisen und die elektrischen Kolbenkontakte (541, 542) jeweils eine Kontaktbürste oder einen Schleifring aufweisen oder umgekehrt.

13. Arbeitsgerät nach einem der vorhergehenden Ansprüche, aufweisend eine Aufnahme (20), welche dafür vorgesehen ist, ein Befestigungselement aufzunehmen, wobei der Arbeitskolben (420) dafür vorgesehen ist, ein in der Aufnahme (20) aufgenommenes Befestigungselement entlang der Arbeitsachse in den Untergrund zu befördern.

## Claims

1. Working tool for machining a substrate, having a stator (430) and a working piston (420) which is intended to move relative to the stator (430) along a working axis, further having a drive (410) which is intended to drive the working piston (420) along the working axis from a starting position to the substrate, wherein the drive (410) has a stator coil (450) arranged on the stator (430) and is intended to supply the stator coil (450) with electrical current of a first current intensity I₁ in order to generate a magnetic field which accelerates the working piston (420) relative to the stator (430) and in particular repels the working piston (420), **characterized in that** the drive (410) has a piston coil (440) arranged on the working piston (420) and is intended to supply the piston coil (440) with electrical current of a second current intensity I₂ in order to generate a magnetic field which accelerates the working piston (420) relative to the stator (430) and in particular repels the stator (430), wherein the second current intensity I₂ is less than the first current intensity I₁.

2. Working tool according to Claim 1, wherein the drive (410) has a piston-coil capacitor (561), wherein the piston coil (440) is able to be electrically connected to the piston-coil capacitor (561) so as to be flowed through by the electrical current of the first current intensity I₁ when the piston-coil capacitor (561) is rapidly discharged.

3. Working tool according to either of the preceding claims, wherein the drive (410) has a stator-coil capacitor (562), wherein the stator coil (450) is able to be electrically connected to the stator-coil capacitor (562) so as to be flowed through by the electrical current of the second current intensity I₂ when the stator-coil capacitor (562) is rapidly discharged.

4. Working tool according to one of the preceding claims, wherein the piston coil (440) has a piston-coil axis and the stator coil (450) has a stator-coil axis which is oriented parallel to the piston-coil axis and in particular coincides with the piston-coil axis.

5. Working tool according to Claims 2 and 4, wherein when the piston-coil capacitor (561) and the stator-coil capacitor (562) are rapidly discharged the piston coil (440) and the stator coil (450) are flowed through with current in opposite directions so as to generate opposing magnetic fields.

6. Working tool according to one of Claims 2 to 5, wherein the piston-coil capacitor (561) and the stator-coil capacitor (562) are identical.

7. Working tool according to Claim 6, wherein the piston coil (440) and the stator coil (450) are electrically interconnected in parallel with one another.

8. Working tool according to one of the preceding claims, wherein the stator coil (450) has a first number of turns N₁, and wherein the piston coil (440) has a second number of turns N₂ which differs from the first number of turns N₁.

9. Working tool according to Claim 8, wherein N₂ > N₁.

10. Working tool according to either of Claims 8 and 9, wherein substantially N₁·I₁ = N₂·I₂.

11. Working tool according to one of the preceding claims, wherein the stator (430) has two electrical stator contacts (531, 532) and the working piston (420) has two electrical piston contacts (541, 542) each sliding on one of the electrical stator contacts (531, 532), so as to supply the piston coil (440) with the electrical current of the second current intensity I₂.

12. Working tool according to Claim 11, wherein the electrical stator contacts (531, 532) each have a contact bar and the electrical piston contacts (541, 542) each have a contact brush or a slip ring, or vice versa.

13. Working tool according to one of the preceding claims, having a receptacle (20) which is intended to receive a fastening element, wherein the working piston (420) is intended to transport a fastening element, received in the receptacle (20), along the working axis into the substrate.

## Revendications

1. Appareil de travail pour travailler sur un substrat, comprenant un stator (430) et un piston de travail (420) prévu pour se déplacer par rapport au stator (430) le long d'un axe de travail, comprenant en outre un entraînement (410) prévu pour déplacer le piston de travail (420) le long de l'axe de travail depuis une position de départ jusqu'au substrat à travailler, l'entraînement (410) présentant une bobine de stator (450) agencée sur le stator (430) et étant prévu pour alimenter la bobine de stator (450) en courant électrique d'une première intensité de courant I₁, de façon à générer un champ magnétique qui accélère le piston de travail (420) par rapport au stator (430) et qui repousse en particulier le piston de travail (420), **caractérisé en ce que** l'entraînement (410) présente une bobine de piston (440) agencée sur le piston de travail (420) et est prévu pour alimenter la bobine de piston (440) avec un courant électrique d'une deuxième intensité I₂ afin de générer un champ magnétique qui accélère le piston de travail (420) par rapport au stator (430) et repousse en particulier le stator (430), la deuxième intensité I₂ étant inférieure à la première intensité I₁.

2. Appareil de travail selon la revendication 1, dans lequel l'entraînement (410) présente un condensateur (561) de bobine de piston, la bobine de piston (440) étant apte à être reliée électriquement au condensateur (561) de bobine de piston afin d'être traversée par le courant électrique de la première intensité I₁ lors d'une décharge rapide du condensateur (561) de bobine de piston.

3. Appareil de travail selon l'une des revendications précédentes, dans lequel l'entraînement (410) comprend un condensateur (562) de bobine de stator, la bobine de stator (450) étant apte à être reliée électriquement au condensateur (562) de bobine de stator de façon à être traversée par le courant électrique de la deuxième intensité I₂ lors d'une décharge rapide du condensateur (562) de bobine de stator.

4. Appareil de travail selon l'une des revendications précédentes, dans lequel la bobine de piston (440) présente un axe de bobine de piston et la bobine de stator (450) présente un axe de bobine de stator qui est orienté parallèlement à l'axe de bobine de piston et qui coïncide notamment avec l'axe de bobine de piston.

5. Appareil de travail selon les revendications 2 et 4, dans lequel la bobine de piston (440) et la bobine de stator (450) sont traversées par un courant en sens inverse lors de la décharge rapide du condensateur (561) de bobine de piston et du condensateur (562) de bobine de stator afin de générer des champs magnétiques opposés l'un à l'autre.

6. Appareil de travail selon l'une des revendications 2 à 5, dans lequel le condensateur (561) de bobine de piston et le condensateur (562) de bobine de stator sont identiques.

7. Appareil de travail selon la revendication 6, dans lequel la bobine de piston (440) et la bobine de stator (450) sont connectées électriquement l'une à l'autre en parallèle.

8. Appareil de travail selon l'une quelconque des revendications précédentes, dans lequel la bobine de stator (450) présente un premier nombre de spires N₁, et dans lequel la bobine de piston (440) présente un deuxième nombre de spires N₂ qui est différent du premier nombre de spires N₁.

9. Appareil de travail selon la revendication 8, dans laquelle N₂ > N₁.

10. Appareil de travail selon l'une quelconque des revendications 8 à 9, dans lequel sensiblement N₁·I₁ = N₂·I₂.

11. Appareil de travail selon l'une des revendications précédentes, dans lequel le stator (430) comporte deux contacts électriques (531, 532) de stator et le piston de travail (420) comporte deux contacts électriques (541, 542) de piston coulissant chacun sur l'un des contacts électriques de stator (531, 532) pour alimenter la bobine de piston (440) avec le courant électrique de deuxième intensité I₂.

12. Appareil de travail selon la revendication 11, dans lequel les contacts électriques (531, 532) de stator comprennent chacun une barre de contact et les contacts électriques (541, 542) de piston comprennent chacun un balai de contact ou une bague collectrice, ou vice versa.

13. Appareil de travail selon l'une quelconque des revendications précédentes, comprenant un logement (20) prévu pour recevoir un élément de fixation, le piston de travail (420) étant prévu pour entraîner dans le substrat, le long de l'axe de travail, un élément de fixation reçu dans le logement (20).
